# EUROPEAN PATENT APPLICATION

(11) **EP 4 512 745 A1**
(43) Date of publication of application: **26.02.2025**
(21) Application number: 23193062.9
(22) Date of filing: 23.08.2023
(51) Int. Cl.: B65G 1/04

(54) **VEHICLE FOR CARRYING A STORAGE BIN**

(71) Applicant: VOLUME Lagersysteme GmbH, 01067 Dresden (DE)
(72) Inventor: Voloskov, Mikhail, 01067 Dresden (DE); Preußer, Martin, 01067 Dresden (DE)
(74) Representative: Laqua, Bernd Christian Kurt

(57) **Abstract**

The present disclosure relates to a vehicle (100) having a movable body (110), a lever (120) extending from the movable body (110) and a carrier platform (200) coupled to the lever (120). The carrier platform can carry a storage bin (50), for example, by gripping the storage bin (50). The vehicle further comprises a bin stabiliser arranged at least on opposite sides of the carrier platform (200) and configured to reduce or avoid movement of the storage bin (50) relative to the carrier platform (200).

## Description

### Technical Field

The present disclosure generally relates to the field of carrying storage bins in a warehouse. More particularly, the present disclosure relates to a vehicle for transporting a storage bin, which can stabilise the storage bin during movement. A warehouse storage module to exemplify the use of such vehicle is disclosed as well.

### Background

In the industry, warehouses are used to store large amounts of goods in an organized manner. Warehouse systems typically employed nowadays encompass a variety of types of storage systems ranging from simple pallet racks, allowing the storage of palletized goods in horizontal rows with multiple levels where stacker cranes are employed to retrieve goods from the racks, to compact warehouse systems that rather focus on the efficient use of available space in a warehouse.

When goods are transported in such warehouses, a vehicle is employed that can carry the goods and move the goods in the warehouse, for example, from a handover point to any storage position in the warehouse and back. Such vehicle may drive autonomously, so that it may be referred to as a robot.

Automated warehouse systems, such as the one disclosed in WO 2014/075937 A1, are one example of compact warehouse systems. Such warehouse systems may comprise a grid structure of storage cells, wherein each storage cell is arranged to accommodate a vertical stack of storage bins. At a top level of the grid structure, one or more robots (or, more generally, "vehicles") may move horizontally to receive and place storage bins from and to the stacks of the storage cells, i.e., by raising storage bins from the stacks to the top level or lowering storage bins from the top level down onto the stacks, respectively. Such warehouse systems are offered by AutoStore (http://www.autostoresystem.com), for example.

The robot is configured to convey the storage bin in a vertical direction, for example, down to a storage cell, storage location or handover station, and up in order to lift the storage bin from the ground or storage cell and move the storage bin in a horizontal plane.

While such systems may efficiently pick up and place goods and storage bins, they may suffer from the problem that the lifted storage bin can move relative to the robot due to the movement of the robot. For instance, the storage bin can swing.

### Summary

It is thus an object of the present disclosure to provide a vehicle for transporting a storage bin in a more secure manner.

According to a first aspect helping to understand the present disclosure, a vehicle for transporting a storage bin in a warehouse is provided. The vehicle comprises a movable body configured to move on a surface. The movable body may constitute the main part or main body of the vehicle, as it is capable of (autonomously) moving with or without carrying a storage bin, for example, in a warehouse.

The vehicle further comprises a lever extending from the movable body, and a carrier platform coupled to the lever and configured to carry a storage bin. In other words, the storage bin can be carried by the carrier platform alongside the movable body due to the extending lever. As a mere example, the lever can be arranged in a top region of the movable body, wherein the carrier platform lifts or hoists the storage bin.

Furthermore, the vehicle comprises a bin stabiliser arranged at least on opposite sides of the carrier platform and configured to reduce or avoid movement of the storage bin relative to the carrier platform, such as swinging of the storage bin when carried by the carrier platform (e.g., during movement, such as acceleration or deceleration, of the vehicle). For instance, the bin stabiliser shall avoid that the storage bin falls off the carrier platform.

As a mere example, the vehicle can comprise one or more clasps or hooks to hold the storage bin during transport. Such clasps or hooks may be designed to be actuated, so that the vehicle can autonomously pick up and release a storage bin. However, in order for a fast picking up and releasing of the storage bin, there is usually only one or two clasps or hooks. This allows avoiding problems which would delay picking up and releasing the storage bin.

Arranging a bin stabiliser on opposite sides of the carrier platform, and hence on opposite sides of the storage bin, provides additional holding points between the storage bin and the carrier platform. As a mere example, the bin stabiliser can be provided in addition to a regular clasp or hook of the vehicle, but is not limited thereto.

In one variant, for example, the bin stabiliser can comprise a pair of clasps arranged on one side of the carrier platform, and (e.g., exactly) one clasp arranged on an opposite side of the carrier platform. Each of the clasps is configured to grip the storage bin. At least some of the clasps of the bin stabiliser can include or constitute the regular clasp or hook of the vehicle for gripping the storage bin during the time when the storage bin is to be moved by the vehicle (vertically and/or horizontally). However, as the total number of clasps is three, the storage bin can be held in a stabilised manner.

As a mere example, the clasps of the pair of clasps are spaced apart from one another. This allows arranging the three clasps in a plane (e.g., the three clasps form a triangle), so that a stabilised gripping of the storage bin can be achieved. The distance between the clasps of the pair of clasps is to be sufficiently large, in order to provide the stabilising effect. For instance, the distance can be equal to or larger than 5%, 10%, 20% or 50% of the width (or length) of the storage bin at the side where the pair of clasps grips the storage bin, preferably the distance can be between 15% and 30% of the width (or length) of the storage bin, for example.

In another variant, the bin stabiliser can comprise at least three clasps evenly distributed along a circumference of the carrier platform. Specifically, the shape of the storage bin (in a plan view) can include a circle (such as a barrel) or a triangle, so that three evenly distributed clasps can grip and stabilise the storage bin. It is to be understood that the shape of the storage bin (in a plan view) can be arbitrarily chosen, and the arrangement of the stabilising clasps can correspond to the shape of the storage bin.

In a further variant, the bin stabiliser can comprise four clasps arranged pairwise on opposite sides of the carrier platform. As a mere example, four (evenly distributed) clasps can grip and stabilise a rectangular or elliptical storage bin. In other words, one clasp is arranged on each side of the storage bin.

In another variant, each of the clasps can be pivotally mounted to the carrier platform and biased towards a gripping position. The biasing of the clasps allows automatic gripping of a storage bin, for example, at a top of a stack by lowering the clasps from the lever to the top storage bin, wherein a portion of the storage bin spreads the clasps until they can hook into a recessed/protruding grip/handle of the storage bin due to the biasing.

Alternatively or additionally, the carrier platform can comprise a clasp actuator configured to move the clasps at least from a gripping position to an open position. In the gripping position, the clasps and carrier platform hold the storage bin, for example, for retrieving and lifting the storage bin. The clasp actuator may move the clasps to an open position, where the storage bin is released from the gripping, for example, when the storage bin is placed on a stack or the handover point of the system. As a mere example, the clasp actuator may comprise an electric motor, pneumatic motor, hydraulic motor, magnet, cylinder/piston actuator, or the like.

In a variant, the clasps correspond to a first (group of) clasp(s) arranged to grip the storage bin from one side of the storage bin, wherein the carrier platform comprises a second (group of) clasp(s) arranged to grip the storage bin from a second (e.g., opposite) side of the storage bin, wherein the clasp actuator is configured to move the first (group of) clasp(s) and the second (group of) clasp(s) together (e.g., simultaneously) from a gripping position to an open position. To move all (groups of) clasps, such as three or four clasps on respective three or four sides of the storage bin. Thus, instead of providing separate clasp actuators for each (group of) clasp(s) (provided to grip the storage bin on different sides of the storage bin), a single clasp actuator may be provided that is configured to move the (groups of) clasp(s) on all sides of the storage bin simultaneously. To this end, a corresponding coupling structure may be provided to move all (groups of) clasp(s) together using the drive of the single actuator.

Still alternatively or additionally, the carrier platform can comprise one or more biasing elements biasing each of the clasps towards the gripping position. Such biasing element may be a (biased) spring forcing the clasps towards the gripping position. For example, the biasing element may rotate the pivotally mounted clasp(s) towards the gripping position. While it will be understood that a single biasing element may be used to bias each clasp of the group of clasps, in one variant, each of the clasps may be biased by a separate biasing element (e.g., spring) towards the gripping position. This enables associating each clasp with a different biasing force, e.g., to optimize the biasing force needed for each clasp depending on the particular coupling structure supported by that clasp.

In yet another variant, the bin stabiliser can comprise at least two fixed fingers arranged on opposite sides of the carrier platform, and wherein each fixed finger has a contact surface configured to contact a surface of the storage bin at an outer or inner circumference of the storage bin, when the storage bin is carried by the carrier platform. The fixed finger is fixedly mounted to the carrier platform. Such a fixed finger allows stabilising the storage bin, as it additionally holds the storage bin.

It is to be understood that a "contact surface" and "to contact a surface" in the present disclosure means that the respective surface can contact another surface or can be in close proximity under regular tolerances. Thus, the contact or contacting surface can also be referred to as a cover surface or a surface covering another surface. The present disclosure is not limited to an actual contact between both surfaces, as long as the stabilising functionality is achieved, such as having some small leeway, but still providing spatial delimiters for the movement of the component to be stabilised.

In one variant, a distance between the opposite fixed fingers approximately corresponds to an outer size of the storage bin, such as a width or length or diameter of the storage bin at an outer circumference. For instance, the distance between the opposite fixed fingers can be equal to or slightly larger than the size of the storage bin. This allows placing the carrier platform over or on top of the storage bin, with the fixed fingers being placed next to an exterior of the storage bin or contacting the storage bin on both opposite outer sides.

Alternatively, the distance between the opposite fixed fingers is approximately corresponds to an inner size of the storage bin, such as a width or length or diameter of the storage bin at an inner circumference. For instance, the distance between the opposite fixed fingers can be equal to or slightly smaller than the size of the storage bin. This allows placing the carrier platform into the storage bin, with the fixed fingers being placed next to an interior of the storage bin or contacting the storage bin on both opposite inner sides.

In both cases, the fixed fingers can be passive elements holding/stabilising the storage bin, without actually gripping the storage bin (e.g., having some small leeway, but still providing spatial delimiters for the movement of the storage bin with respect to the carrier platform which ensures that the storage bin cannot fall off the carrier platform, especially during movement, such as acceleration or deceleration, of the vehicle).

As a mere example, during movement of the vehicle, the weight of the storage bin and/or the good in the storage bin, and/or the inertia of the storage bin and/or good acts on the carrier platform as well as any clasp or hook used to grip the storage bin. In case of a high weight and/or high acceleration/deceleration of the vehicle, the storage bin may become loose (get out of grip) and may fall down. For instance, in case of a biased clasp or hook, the inertia of the storage bin and/or good may act against the biasing force of the clasp or hook to such an extent that the storage bin is released from the grip on the opposite side (e.g., the storage bin loses the grip of the clasp or hook on the opposite side). The at least two fixed fingers provide additional stabilisation of the storage bin and reduce or omit any movement of the storage bin relative to the carrier platform.

In one variant, the bin stabiliser can comprise four fixed fingers arranged pairwise on opposite sides of the carrier platform (e.g., one fixed finger on each of four sides of the carrier platform). This allows stabilisation of the storage bin in all four directions. For instance, having a fixed finger on each of four sides of the storage bin, the storage bin is held by the fixed finger in any direction in which a clasp or hook moves from a gripping position to an open position. Thus, the bin stabiliser significantly reduces the risk of losing the storage bin, even when the storage bin and/or goods therein have a high weight and/or when the vehicle performs a high acceleration or deceleration.

In a further variant, the contacting surface of each fixed finger can transition into an inclined surface towards a lower end of the fixed finger. The lower end, hence, can be configured to facilitate gliding of the fixed finger over an (e.g., inner or outer) edge of the storage bin. This allows placing the carrier platform over or into the storage bin, even if the carrier platform moves relative to the storage bin or is slightly misplaced.

In yet a further variant, each fixed finger can have a vertical extent to contact the storage bin at at least two spaced apart vertical positions of the storage bin. Since the fixed finger is fixedly mounted to the carrier platform, the storage bin is securely stabilised by the fixed finger. It is to be understood that depending on the shape of the storage bin, the fixed finger can contact the storage bin at more than two points along a vertical line or even contact the storage bin in an area (two-dimensionally).

In another variant, at least one of the fixed fingers can have a horizontal extent (width) equal to or larger than 2%, 10%, 20% or 50% of a horizontal extent of the storage bin, preferably corresponding to 5% to 20% of the horizontal extent of the storage bin, for example. This further allows stabilising the storage bin in the horizontal direction. Thus, the storage bin is hindered from rotating around a vertical or a inclined axis.

In one variant, at least one of the fixed fingers can have an outer surface configured to slide in a guide rail of a storage system. Such guide rail may be installed in a storage system in a vertical manner, so that the guide rail guides the carrier platform in the vertical direction (along the longitudinal direction of the guide rail) indirectly via the fixed finger sliding along the guide rail. This further increases storage bin stability during lifting and placing of the storage bin in the storage system.

In a further variant, the outer surface of each fixed finger can transition into an inclined surface towards a lower end of the fixed finger. The lower end, hence, can be configured to facilitate receiving the fixed finger in the guide rail. This allows moving the carrier platform, so that the fixed fingers can be inserted into the guide rails, even if the carrier platform moves relative to the guide rail or is slightly misplaced.

In one variant, the bin stabiliser can comprise at least one finger cover coupled to the lever and including a recess configured to contact a surface of a fixed finger. Thus, when the carrier platform is brought into proximity to the lever, for example, by lifting the carrier platform, the fixed finger can be stabilised when received in the recess. Since the fixed finger stabilises the storage bin, the finger cover additionally stabilises the storage bin indirectly via the fixed finger.

In another variant, the recess of the finger cover can have a V-shape or open funnel-shape in a vertical direction configured to facilitate gliding of the fixed finger into the recess. In other words, in a side view of the finger cover, the recess widens at at least one end. For instance, if the carrier platform is lifted up towards the lever, the V-shape or open funnel-shape of the recess is upside-down, so that the wider opening of this shape points downwards. This facilitates receiving the fixed finger in the recess when the carrier platform moves up and comes closer to the lever.

As a mere example, the recess of the finger cover can have one or more surfaces contacting a corresponding surface of the fixed finger. In case of a plurality of surfaces, the surfaces preferably face different directions, so that the finger cover is capable of stabilising the carrier platform in more than one direction.

In one variant, the at least one finger cover has a contact surface configured to contact a surface of the storage bin at an outer or inner circumference of the storage bin, when the storage bin is carried by the carrier platform. In other words, the contact surface of the finger cover is located towards the centre of the carrier platform (in a plan view) to such an extent that the contact surface is positioned in contact with a portion of the storage bin. For instance, if the fixed finger is received in the recess of the finger cover, the contact surface of the finger cover is arranged flush with a contact surface of the fixed finger. This additionally stabilises the storage bin, particularly, when the carrier platform is in close proximity to the lever. As a mere example, if the carrier platform is lifted up, the fixed finger can stabilise the storage bin during the lifting (upwards) movement, and the finger cover additionally stabilises the storage bin when the carrier platform is in the topmost position. This is usually the position of the storage bin (and the carrier platform), when the vehicle moves, and when the largest forces and inertia acts on the system due to moving of the vehicle.

In a further variant, the bin stabiliser comprises at least one cover coupled to the lever and configured to contact a portion of the carrier platform and/or a portion of the storage bin. The cover can be arranged at the lever in such a manner that the carrier platform and/or the storage bin is at least partially covered by the cover. Thus, the cover can be a passive element holding/stabilising the carrier platform and/or the storage bin, without actually gripping the storage bin (e.g., having some small leeway, but still providing spatial delimiters for the movement of the carrier platform and/or storage bin with respect to the lever which further ensures that the storage bin cannot fall off the carrier platform, especially during movement, such as acceleration or deceleration, of the vehicle).

As a mere example, in case the carrier platform and, hence, the storage bin can be moved relative to the lever, the at least one cover can be configured (i.e., can have a size) to partially cover the carrier platform and/or the storage bin, if the carrier platform and the storage bin are brought into close proximity or into contact with the lever.

In another variant, the carrier platform can comprise a pin, and the lever can comprise a retaining opening configured to receive at least a portion of the pin. The pin can be arranged on the carrier platform pointing in a direction of the movement of the carrier platform. Thus, when the carrier platform is moved towards the lever, the carrier platform is stabilised with respect to the lever via the pin being received in the retaining opening. As a mere example, the retaining opening can have an interior shape corresponding to an outer shape of the pin.

It is to be understood that the inner shape of the retaining opening and the outer shape of the pin may be arbitrarily chosen. Thus, both elements can have a circular shape, a triangular shape, a rectangular shape, or the like. In case of a circular shape, the retaining opening forms a retaining ring, which specifically facilitates receiving the round pin.

Alternatively, the pin can be provided at the lever and the retaining opening can be provided at the carrier platform.

In one variant, the vehicle can further comprise a lifting mechanism configured to raise and lower a gripped storage bin. Specifically, the lifting mechanism can be coupled to the lever and the carrier platform. The lifting mechanism may be configured to move a portion of the vehicle, such the carrier platform, towards the lever and, hence, the movable body, and optionally away from the movable body. This moving of a storage bin may be substantially vertical and/or may be supported by an electric motor. Particularly, moving the storage bin by the lifting mechanism may be performed in an upward direction, while moving the storage bin in a downward direction may be achieved by gravity only. Alternatively, the lifting mechanism may be configured to actively move the storage bin downwards.

As a mere example, the lifting mechanism can include one or more extractable straps, belts, ropes or wires, which connect the lever and the carrier platform. The lifting mechanism can include a winch or roller on the lever or the carrier platform winding the strap, belt, rope or wire. The strap, belt, rope or wire can be extracted by unwinding the strap, belt, rope or wire from the winch or roller, and can be wound around the winch or roller for lifting the storage bin up. Thus, once the storage bin is gripped, the carrier platform can be lifted upwards via the strap, belt, rope or wire, so that the storage bin can be, for example, brought to a top position allowing the vehicle to move together with the gripped storage bin.

In another variant, the vehicle can further comprise a steering mechanism configured to control a moving direction of the movable body. The steering mechanism can include one or more swivelling wheels, including an actuator to swivel or rotate the respective wheel around a vertical axis. The steering mechanism can further comprise one or more driven wheels, so that the movable body and, hence, the vehicle, can be moved/driven. This moving or driving can be performed autonomously like a robot.

In another variant, the vehicle can further comprise an alternating mechanism, such as a rotating mechanism configured to rotate the lever between a rotational position in which the lever extends beyond a first vertical side of the movable body and a rotational position in which the lever extends beyond a second vertical side of the movable body.

As a mere example, the rotating mechanism can be arranged at a top of the movable body of the vehicle. In addition, the rotating mechanism can be configured to rotate around a vertical axis and about 360° and/or about 180° in each direction.

In yet another variant, the alternating mechanism may comprise an extension mechanism configured to alternatingly move the lever and/or carrier platform between a near position and an extended position, wherein the lever and/or carrier platform in the extended position is further away from the movable body than in the near position. The near position as well as the extended position are on the same side of the movable body, such as the first or second vertical side. Thus, the extension mechanism moves the lever and/or carrier platform between two positions on the same side of the movable body. As a mere example, the near position may correspond to a position of the storage bin gripped by the carrier platform above a storage cell of a two-dimensional grid of storage cells (each cell forming a storage space for a stack of storing bins).

In the extended position, the extension mechanism can move the lever and/or carrier platform in such a manner that a storage bin gripped by the carrier platform is spaced apart from the movable body of the vehicle far enough, so that it does not contact (collide) with a portion of the movable body, such as a corner or edge of the movable body, during a rotation induced by the rotating mechanism. This also reduces the lever arm of the carrier platform when being in the near position, so that the forces and moments acting on the movable body of the vehicle (for example during movement of the vehicle) can be kept to a minimum. The extended position may only be used when activating the rotating mechanism, at which time the vehicle may usually be stopped. It is to be understood that the vehicle may also move when the carrier platform is in the extended position, for example, if the weight of the storage bin does not exceed an associated threshold or if the weight of the movable body is high enough.

According to a second aspect helping to understand the present disclosure, a warehouse storage module is provided that provides space for a three-dimensional arrangement of storage bins, the storage module comprising a storage area and a top level arranged above the storage area, wherein the storage area is adapted to accommodate a plurality of stacks of storage bins arranged in a horizontal two-dimensional grid at a bottom of the storage module, wherein the top level is adapted to allow at least one vehicle according to the first aspect or one or more of its variants to be movable, at the top level, to retrieve and place storage bins from and to the plurality of stacks.

In one variant, the warehouse storage module can comprise one or more guide rails configured to receive a portion of a fixed finger of the carrier platform of the vehicle. This allows guiding the movement of the carrier platform via the fixed finger sliding or running in the guide rail.

As a mere example, the guide rail can have an L-shaped or U-shaped cross-section, while the fixed finger has a corresponding cross-section with at least one corner. The respective inner surfaces of the guide rail and outer surfaces of the fixed finger can be configured to slide on one another.

In another variant, the one or more guide rails can include a widening opening at the top or bottom, such as a V-shape or an open funnel, so that the fixed finger can easily be received in one of the guide rails and be then guided through the guide rail during a lifting movement of the carrier platform.

According to a third aspect helping to understand the present disclosure, a warehouse system is provided that provides space for a three-dimensional arrangement of storage bins, wherein the warehouse system comprises a plurality of interconnected storage modules according to the second aspect or one or more of its variants, wherein the plurality of interconnected storage modules comprises at least two levels of storage modules placed one above the other in an individual room (e.g., of a building or container).

### Brief Description of the Drawings

In the following, aspects of the present disclosure will be described in more detail, also with reference to the accompanying drawings, in which:
- Figure 1: illustrates a perspective view of an exemplary vehicle together with a gripped storage bin;
- Figure 2: illustrates a perspective view of an exemplary carrier platform gripping a storage bin;
- Figure 3: illustrates a side view of carrier platform of Figure 2;
- Figure 4: illustrates a perspective view of an exemplary bin stabiliser relative to a storage bin, and detailed views of a single bin stabiliser;
- Figure 5: illustrates an exemplary lever and carrier platform, and detailed views of another exemplary bin stabiliser;
- Figure 6: illustrates another exemplary bin stabiliser at a lever, and a detailed view of the bin stabiliser;
- Figure 7: illustrates detailed views of the bin stabiliser of Figure 6; and
- Figure 8: illustrates a perspective view of an exemplary warehouse system having two storage modules and vehicles shifting storage bins beyond different edges of the storage modules.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

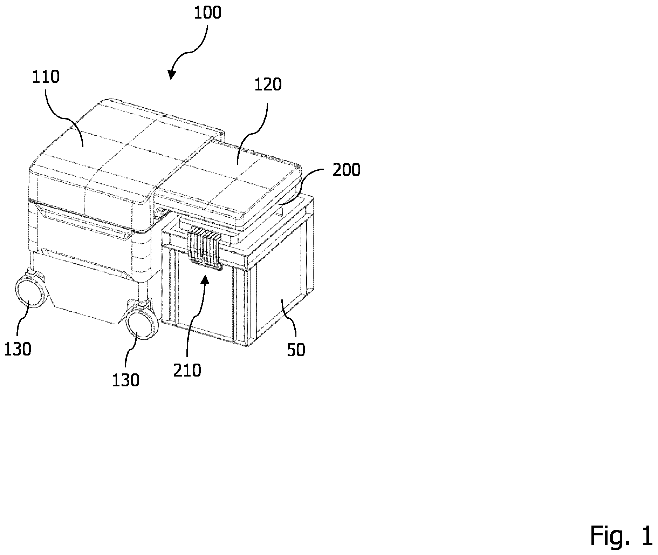

According to a first aspect helping to understand the present disclosure, there is provided a vehicle 100 for transporting a storage bin 50 in a warehouse, which can be gripped by a clasp 210. For instance, one or more clasps 210 can be arranged on a first side of the vehicle 100 and storage bin 50 (visible in Figure 1), while one or more clasps 210 are also arranged on an opposite side of the vehicle 100 and storage bin 50.

The vehicle 100 comprises a movable body 110 configured to move on a surface (e.g., a ground floor of the warehouse or in rails of a warehouse system, in which the vehicle may move). The movable body 110 can include rolls or wheels 130, at least one of which is drivable (can be rotated around a horizontal axis) to move the vehicle 100 forward and backward, and at least one of which can be steered (can be rotated around a vertical axis) to control a moving direction of the vehicle 100.

The vehicle 100 further comprises a lever 120 (or "tower") extending from the movable body 110. Figure 1 illustrates a vehicle 100 where such lever 120 extends at a top region and above the storage bin 50. Furthermore, the vehicle 100 comprises a carrier platform 200 that is coupled to the lever 120 and configured to carry the storage bin 50. In Figure 1 the majority of the carrier platform 200 is not visible as it is arranged underneath the lever 120. The carrier platform 200 is provided with means to grip and release the storage bin 50, such as the clasps 210, so that the storage bin 50 can be picked up, gripped and moved by the vehicle 100.

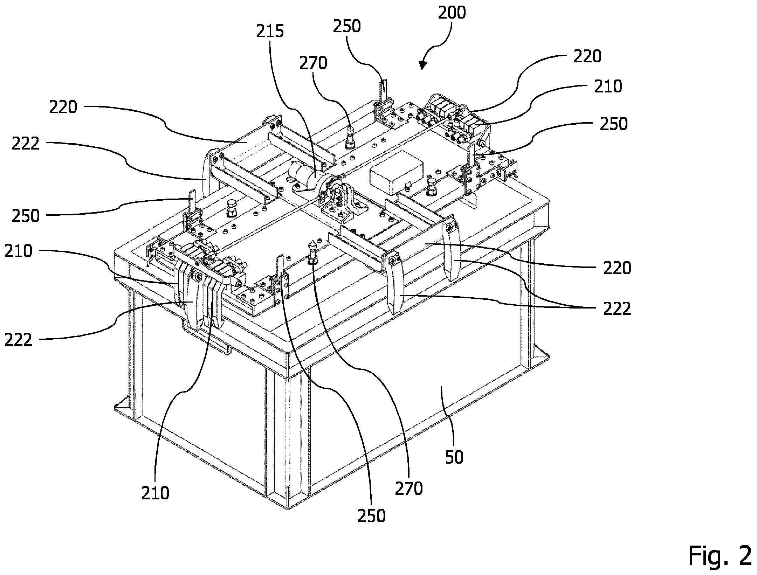

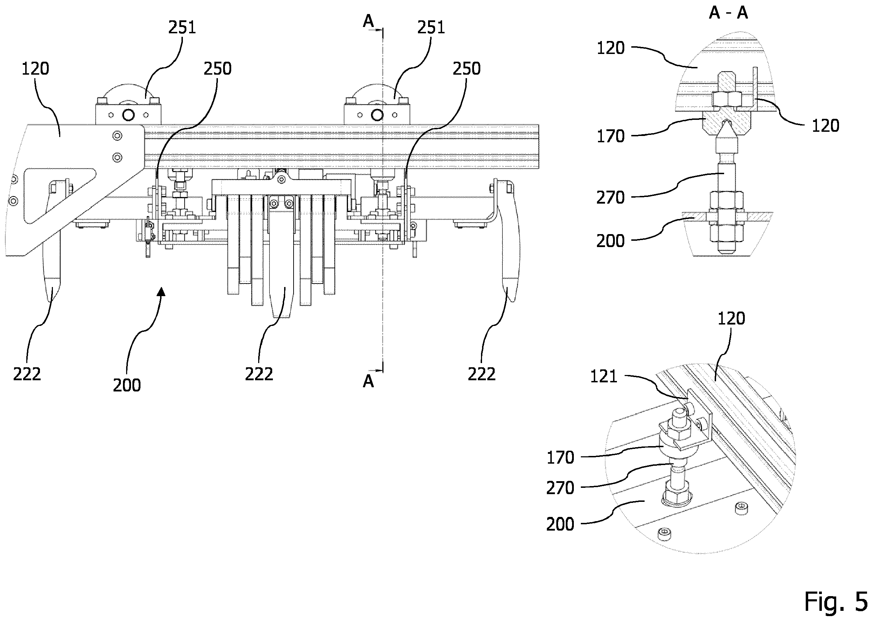

In addition, the carrier platform 200 can be configured to be raised or lowered with respect to the lever. To do so, the vehicle 100 can comprise a lifting mechanism 250, 251 (Figures 2 and 5) configured to raise and lower the storage bin 50. The lifting mechanism can comprise a strap, belt, rope or wire 250 and a winch or roller 251 (Figure 5) to raise and lower the carrier platform 200 (and the storage bin 50 gripped by the carrier platform 200). Alternatively or additionally, the lifting mechanism can comprise a piston or pneumatic component (not illustrated) moving the carrier platform 200 (and the storage bin 50 gripped thereto).

Furthermore, the lever 120 may be extendable or movable relative to the movable body 110. This allows bringing the lever 120, the carrier platform 200 and, hence, the storage bin 50 in any position alongside the movable body 110, e.g., while the movable body 110 is stopped. Alternatively or additionally, the lever 120 may be rotatable relative to the movable body 110, in order to bring the lever 120, the carrier platform 200 and, hence, the storage bin 50 to a different side of the movable body 110.

Figure 2 illustrates a perspective view of an exemplary carrier platform 200 gripping a storage bin 50. Gripping the storage bin 50 is achieved by one or more clasps 210. Figure 2 exemplarily illustrates six clasps 210 on each of two opposite sides of the carrier platform 200. Each clasp 210 is configured to clasp or hook into a recess of the storage bin 50, such as an upper rim, recess, handle or the like. The way of gripping the storage bin 50 is not restricting the scope of the present disclosure and can include any conventional gripping mechanism.

In order to simplify gripping of the storage bin 50, a clasp or hook 210 is arranged on each of two opposite sides of the storage bin 50, that may be actively brought into a gripping position and an open position. Figure 2 illustrates an actuator 215, that may move the oppositely arranged clasps or hooks 210 in an open position (the lower hook-shaped end being spaced apart from the storage bin 50) and into a gripping position (the lower hook-shaped end being in a position engaging with a portion of the storage bin 50 as described above).

Since the vehicle 100 can move with the storage bin 50 gripped, there is a risk that the storage bin 50 disengages the gripping and falls off from one or more of the clasps or hooks 210. As a mere example, assuming that the vehicle 100 accelerates or decelerates in a direction parallel to a connecting line between the opposite clasps 210, the weight or inertia of the storage bin 50 (and the goods stored therein) may act against the gripping force provided by one of the clasps 210. This may allow the storage bin 50 to disengage from the clasp(s) 210 on the opposite side, and the storage bin 50 could fall off. Likewise, the storage bin 50 can vibrate or swing relative to the carrier platform 200 while the vehicle 100 moves.

In order to prevent such movement or disengagement of the storage bin 50, the vehicle 100 further comprises a bin stabiliser arranged at least on opposite sides of the carrier platform 200. Such bin stabiliser is configured to reduce or avoid movement of the storage bin 50 relative to the carrier platform 200, such as swinging or vibrating, and hinders the storage bin 50 from falling off.

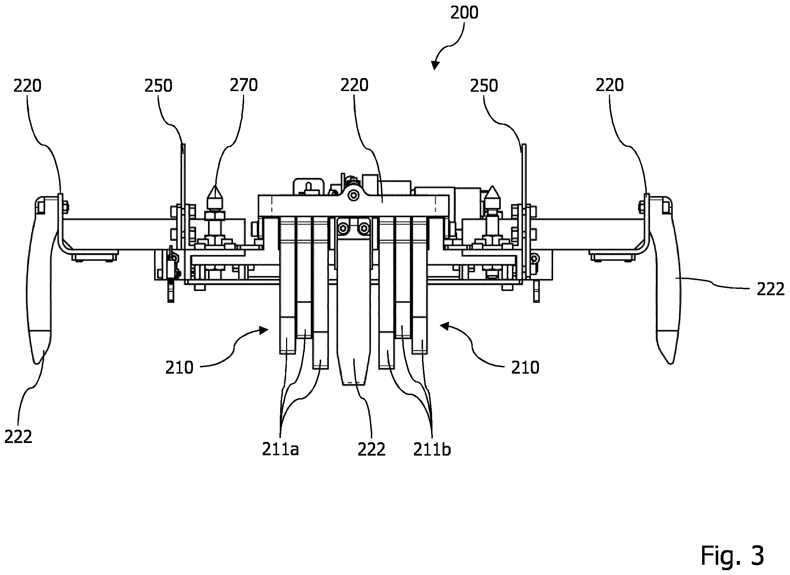

Figures 2 and 3 illustrates various possibilities for implementing a bin stabiliser.

A first optional bin stabiliser can comprise a pair of clasps 211a, 211b arranged on one side of the carrier platform 200 and at least one clasp 210 arranged on an opposite side of the carrier platform 200. Each clasp 210, 211 is configured to grip the storage bin 50. While Figures 2 and 3 illustrate further possible bin stabilisers, the employment of at least three clasps 210, two (211) on one side and at least one on the other (opposite) side, significantly reduces relative movement of the storage bin 50 with respect to the carrier platform 200. The three clasps 210, 211 allow a three point gripping base for the storage bin 50.

Figure 3 illustrates clasps 210 of different lengths. This is an optional feature, in order to have different clasps 210 for different types of storage bins 50. However, providing a pair of clasps 211a, 211b (ideally of same length) being spaced apart from one another as illustrated, provides two gripping bases for the storage bin 50 on one side, which increases bin stability.

It is to be understood that a pair of clasps 211 may be arranged on each side of the two opposite sides of the carrier platform 200.

Likewise, the bin stabiliser may comprise four clasps 210, 211 arranged pairwise on opposite sides of the carrier platform 200. Specifically, such clasps 210, 211 (not explicitly illustrated) may be provided in such a manner that one or more clasps 210, 211 is provided on each of the four sides of the carrier platform 200 and, hence, of the storage bin 50. For instance, with respect to Figure 3, a clasp can also be arranged at the left and right and of the carrier platform 200, where a finger element 222 is illustrated.

Optionally, a width of the clasps 210, 211 may be increased on at least one of the sides, so that the gripping area (contacting area) of the clasp 210, 211 with the storage bin 50 is increased. This additionally stabilises the storage bin 50 during movement of the vehicle 100. As a mere example, the width of the wider clasp(s) can be equal to or larger than 2%, 5%, 10%, 20% or 50% of a horizontal extent of the storage bin in the same direction, preferably the width of the wider clasp(s) can correspond to 5% to 20% of the horizontal extent of the storage bin, for example.

A second optional bin stabiliser illustrated in Figures 2 and 3 comprises at least two fixed fingers 222 arranged on opposite sides of the carrier platform 200. For instance, one fixed finger 222 on each of two opposite sides is sufficient to stabilise the storage bin 50. This can be the opposite sides, where the clasps 210, 211 are arranged, or the other two (opposite) sides of the carrier platform 200. Likewise, one fixed finger 222 on each of four sides (pairwise opposite to one another) provide an increased stability to the storage bin 50.

When a fixed finger 222 is provided together with the clasps 210, 211, i.e., on the same side of the carrier platform 200, such fixed finger 222 prevents the storage bin 50 from moving in a direction, in which the clasps 210, 211 open (release a gripping position). Thus, the storage bin 50 is prevented from getting out of grip on the opposite side.

As can be derived from Figures 2 and 3, a fixed finger 222 can be arranged between a pair of clasps 211. This provides for a distance between the clasps 211a, 211b, which also stabilises the storage bin 50, and further holds the storage bin 50 from moving relative to the clasps 210, 211. Thus, even if the vehicle moves (accelerates or decelerates), the storage bin 50 is prevented from moving relative to the carrier platform 200 and, hence, relative to one or more of the clasps 210, 211 and losing grip therefrom.

When a fixed finger 222 is provided on a side, where no clasp 210, 211 is installed, swinging or vibrating of the storage bin 50 can be reduced or prevented. In addition, a movement of the storage bin 50 in a direction perpendicular to a connecting line of the oppositely arranged clasps 210, 211, can also be prevented. This hinders the storage bin 50 from being dislocated relative to the clasps 210, 211.

The drawings and, particularly Figure 2, illustrate six fixed fingers 222, which is only one further option. The adjacent pair of fixed fingers 222 on the same side, which are spaced apart from one another (see particularly Figure 2), additionally increase the storage bin stability due to the distance between both fixed fingers 222. Specifically, due to the distance between both fixed fingers 222, a rotation of the storage bin 50 around a vertical axis can be reduced or prevented.

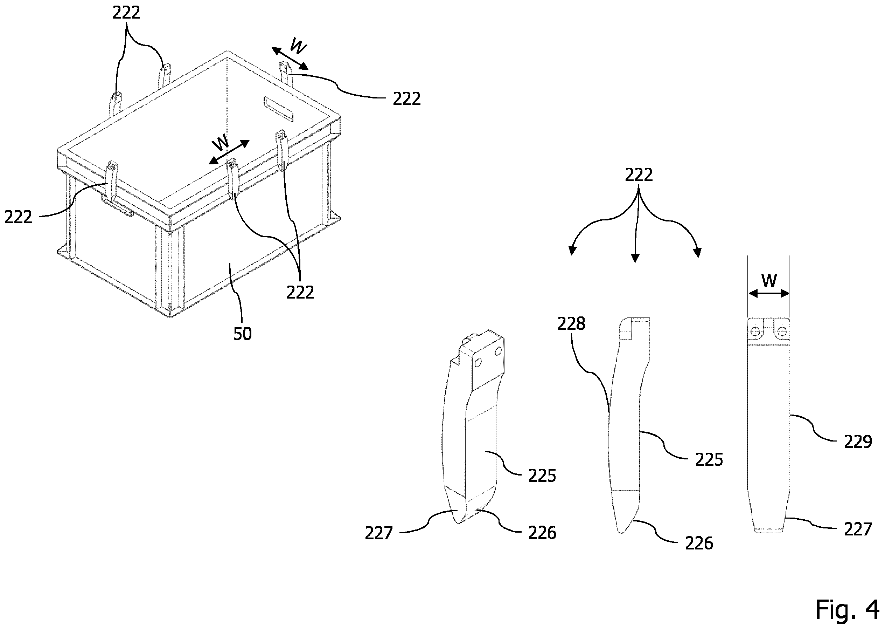

With additional reference to Figure 4, each fixed finger 222 has a contact surface 225 configured to contact a portion of the storage bin 50 at an outer circumference of the storage bin 50, when the storage bin 50 is carried by the carrier platform 200. It will be understood that fixed fingers could also be arranged to contact the storage bin from an inner circumference. As a mere example, the fixed fingers 222 can be employed with any gripping mechanism, such as the clasps 210, 211 illustrated in Figures 2 and 3. The distance between the at least two fingers 222 arranged on opposite sides of the carrier platform 200 should be equal to or slightly larger than the size of the storage bin 50 in this direction. Thus, the carrier platform 200 can be placed on top of the storage bin with the fixed fingers 222 contacting the outer or inner surface of the storage bin 50. Thereafter, the clasps 210, 211 may be brought into a gripping position to firmly hold the storage bin 50.

As said, it is to be understood that the drawings show the fixed fingers 222 to be arranged on an outer circumference of the storage bin 50. At least some of the fixed fingers 222 can likewise be arranged on an inner circumference of the storage bin 50, if the inner circumference can be reached from the top. Preferably, when a fixed finger 222 contacts the storage bin 50 on an inner surface, the oppositely arranged fixed finger 222 is also arranged on the inner side of the storage bin 50, in order to stabilise the bin 50 in both directions.

It is further to be understood that the distance between the at least two fingers 222 arranged on opposite sides of the carrier platform 200 can also be slightly smaller than the size of the storage bin 50 in this direction. If the at least two fingers 222 and/or a portion of the carrier platform 200 provides some elastic behaviour, the carrier platform 200 and the fixed fingers 222 can still be placed over the storage bin 50.

Instead of two adjacent fixed fingers 222 on the same side of the carrier platform 200 (as illustrated in Figures 2 and 4), a single fixed finger 222 could be provided with an increased width W (Figure 4). As illustrated by double arrows, the width W of the fixed finger 222 can vary. For instance, if the vehicle 100 is designed for a rather heavy storage bins 50, a larger width W maybe employed, while in case of rather light storage bins 50, a smaller width W may be employed.

As a mere example, at least one of the fixed fingers 222 can have a horizontal extent equal to or larger than 2%, 5%, 10%, 20% or 50% of a horizontal extent of the storage bin 50. In a preferable implementation, the fixed finger 222 can have a horizontal extent corresponding to 5% to 20% of the horizontal extent of the storage bin 50, for example. In other words, the width W of the at least one fixed finger 222 depends on a size of the storage bin 50 to be gripped and stabilised. It is to be understood that the above percentage values are exemplary only.

Figure 4 further illustrates detailed views of a single bin stabiliser 222. This includes the contact surface 225, which can transition into an inclined surface 226 towards a free end of the fixed finger 222. The free end can be the lower end, if the fixed finger 222 points downwards from the carrier platform 200. The inclined surface 226 facilitates gliding of the fixed finger 222 over an outer edge of the storage bin 50. Specifically, when the carrier platform 200 is lowered above storage bin 50, the fixed fingers 222 can encompass the storage bin 50, even if the carrier platform 200 is not perfectly aligned with the storage bin 50. Alternatively, the surface 228 contact an inner side of the storage bin 50, and the fixed finger 222 is brought into the storage bin 50.

Furthermore, as can be derived from Figure 4, each fixed finger 222 can have a vertical extent to contact the storage bin 50 at at least two spaced apart vertical positions of the storage bin 50. For instance, the storage bin 50 illustrated in Figure 4 has two circumferential rims or edges at its upper end. The vertical extent of the fixed fingers 222 can be chosen to contact both circumferential rims or edges. This increases stability of the storage bin 50 during movement of the vehicle 100. It is to be understood that the contact surface 225 of the fixed fingers 222 may entirely contact a corresponding planar surface of the storage bin (not illustrated), i.e., the fixed fingers 222 have a planar or areal contact with the storage bin 50.

Figure 5 illustrates an exemplary lever 120 and carrier platform 200, and detailed views of another exemplary bin stabiliser 170, 270. Specifically, as indicated above, the carrier platform 200 may be movable relative to the lever 120. For instance, a winch or roller 251 can be arranged at the lever 120, which allows winding a strap, belt, rope or wire 250, which is connected/coupled to the carrier platform 200. Thus, by unwinding the strap, belt, rope or wire 250, the carrier platform 200 can be lowered and by winding the strap, belt, rope or wire 250, the carrier platform 200 can be lifted up. Due to the flexibility of the strap, belt, rope or wire 250 (in a direction perpendicular to the unwound strap, belt, rope or wire 250), the carrier platform 200 can move relative to the lever 120. At least a small movement in this direction is possible, even if the strap, belt, rope or wire 250 is winded on the winch or roller 251, and the carrier platform 240 not contact the lever 120. This is particularly relevant, if a storage bin 50 is gripped and coupled to the carrier platform 200.

As illustrated in the detailed views, the carrier platform 200 can comprise a pin 270, and the lever 120 can comprise a retaining opening 170, here illustrated as a retaining ring. The retaining opening 170 is configured to receive at least a portion of the pin 270, particularly a top portion of the pin 270. Thus, if the carrier platform 200 is lifted up close to the lever 120 (e.g., the topmost position of the carrier platform 200), the pin 270 can be received in the retaining opening 170, which stabilises the carrier platform 200 and, hence, the storage bin 50, in a horizontal direction.

The pin 270 and the retaining opening 170 can have a respective cone shape, which corresponds to one another. This facilitates engaging/receiving the pin 270 in the retaining opening 170, even if the carrier platform 200 is not perfectly aligned with the lever 120.

As a mere example, the lever 120 may comprise a holding component 121, such as an angle, at which the retaining component/ring 170 is mounted. The holding component 121 may be configured to allow an adjustment of the retaining component 170 in a horizontal plane. Likewise, the pin 270 may be mounted to the carrier platform 200 in a manner, where a location of the pin 270 may be adjusted in the horizontal plane, in order to align the pin 270 and the corresponding retaining opening 170.

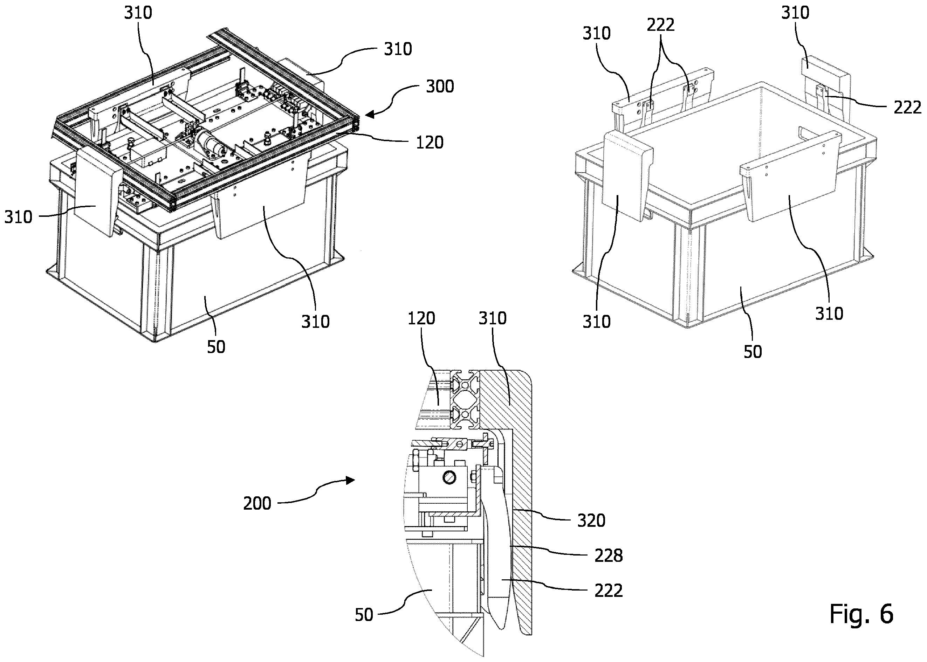

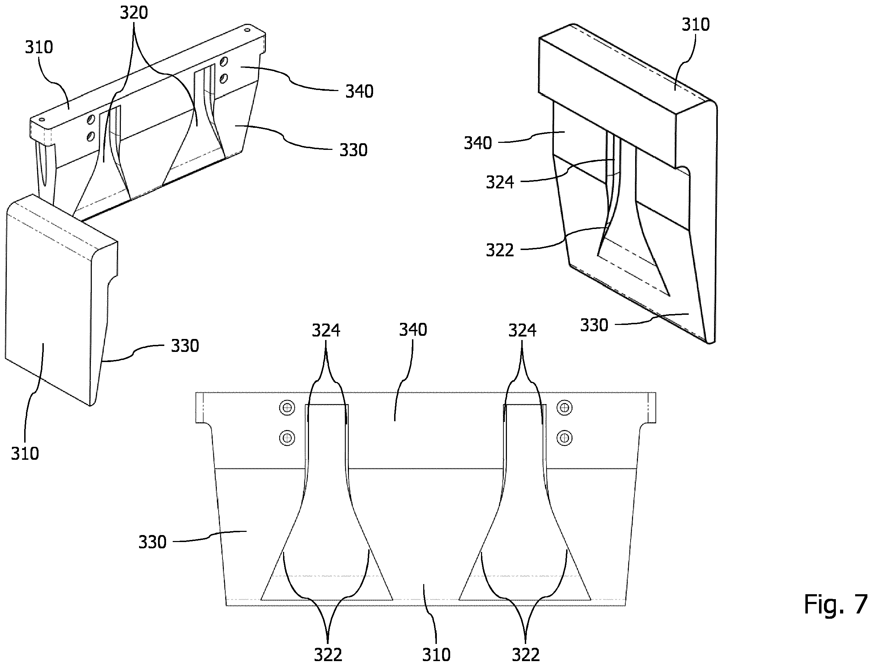

A third optional bin stabiliser is now described with respect to Figures 6 and 7. Such bin stabiliser can comprise at least one finger cover 310 coupled to the lever 120. As can be specifically derived from Figure 7, the finger cover 310 includes a recess 320 configured to contact an outer surface 228, 229 of a fixed finger 222. Thus, when the carrier platform 200 is brought into close proximity of the lever, the fixed fingers 222 can be guided into a respective recess 320. Since the recess 320 contacts the fixed finger 222 at at least one surface 228, 229, the carrier platform 200 and, hence, the gripped storage bin 50 is further stabilised.

Furthermore, the recess 320 of the finger cover 310 can have an upside down V-shape or open funnel-shaped in a vertical direction configured to facilitate gliding of the fixed finger into the recess 320. The larger portion of the recess 320 is facing in the direction from which the fixed finger 222 moves into the recess 320, so that the fixed finger 222 can easily be received in the recess 320, even if the carrier platform 200 is not exactly aligned with the lever 120. As can be derived from Figure 7, the recess 320 can have slanted surfaces 322, which widen the recess 320 downwards, i.e., in the direction from which the fixed finger to a 22 will approach into the recess.

In addition, the finger cover 310 can further comprise an inclined surface 330, that facilitates movement of the carrier platform 200 and, hence, movement of the storage bin 50, in the space provided between two oppositely arranged finger covers 310. Thus, even if the carrier platform 200 is not exactly aligned with the lever 120, such alignment can be achieved via the inclined surfaces 330 of the finger covers 310.

In any case, the finger cover 310 can hinder a movement of the fixed finger 222 in at least one direction, preferably in at least two horizontal directions. In addition, an upper ceiling of the recess 320 can also hinder a movement of the fixed finger 222 in a vertical direction (upwards), so that the carrier platform 200 and, hence, the storage bin 50 is effectively stabilised in all directions. It is to be understood that a downwards movement of the carrier platform 200 can be hindered by the lifting mechanism 250, 251.

The at least one finger cover 310 can further have an inner contact surface 340 configured to contact a portion of the storage bin 50 at an outer circumference of the storage bin 50, when the storage bin 50 is carried by the carrier platform 200 (and the carrier platform 200 achieves a position where the fixed finger 222 is received in the recess 320). Thus, an additional bin stabilisation can be achieved directly between a lever-mounted component 310 and the storage bin 50.

It is to be understood that the finger cover 310 can likewise be arranged on an inner side of the fixed finger(s) 222, and the recess 320 contacts an inner surface of the fixed finger(s) 222. Likewise, an outer surface of the finger cover 310 can be configured to contact a portion of the storage bin 50 at an inner circumference of the storage bin 50, in order to additionally stabilise the bin 50. This is particularly relevant, in case the fixed fingers 222 are arranged on an inner side of the storage bin 50 (not illustrated).

A fourth optional bin stabiliser is now described with respect to Figures 6 and 7, although it is not explicitly illustrated. Such bin stabiliser can comprise at least one cover coupled to the lever and configured to contact a portion of the carrier platform 200 and/or a portion of the storage bin 50. Specifically, the at least one cover can have a form very similar/equivalent to the finger cover 310, but without having any recess 320.

Instead, the cover (310) may have a contact surface (in Figure 6, for example, an inner surface) that can contact or can be brought into close proximity to a portion of the carrier platform 200 and/or a portion of the storage bin 50. This allows blocking a movement of the carrier platform 200 and/or the storage bin 50, for example, when the vehicle 100 moves.

As a mere example, such cover can be employed, if the carrier platform 200 is not equipped with a fixed finger 222. Alternatively, such cover can be installed in a region of the lever, where it does not interfere with a fixed finger 222. Thus, such cover could even be employed in addition to a carrier platform 200 having a fixed finger 222.

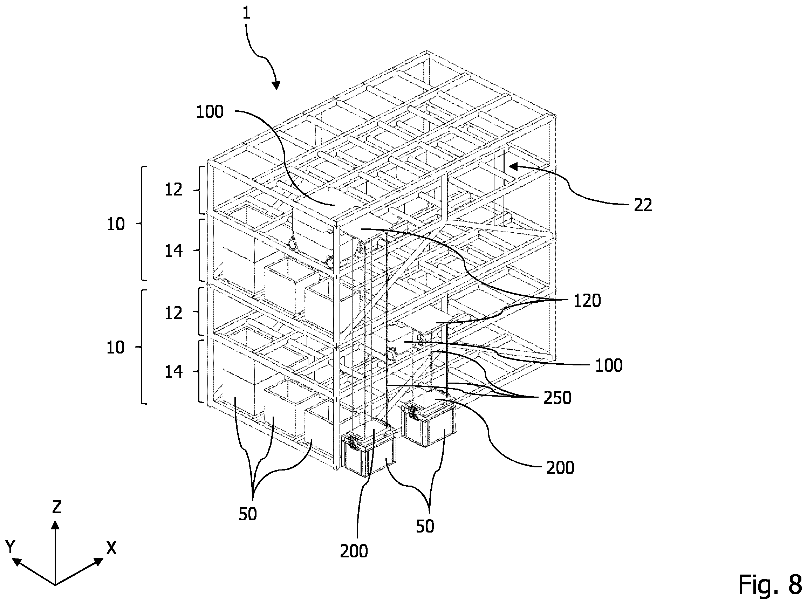

Figure 8 illustrates a perspective view of an exemplary warehouse system 1 having two storage modules 10 and vehicles 100 shifting storage bins 50 beyond different edges of the storage modules 10. Specifically, Figure 8 illustrates a warehouse system 1 having two warehouse storage modules 10 placed one above the other (e.g., in an individual room of a building or container, i.e., without separation of a continuous floor of the building or container). Each warehouse storage module 10 comprises a storage area 14 and a top level 16 arranged above the storage area 14. The storage area 14 is adapted to accommodate a plurality of stacks of storage bins 50 arranged in a horizontal two-dimensional grid at a bottom of the storage module 10. The top level 16 is adapted to allow at least one vehicle 100 to be movable at the top level 16. Figure 8 illustrates two vehicles 100, each being arranged in a top level 16 of a respective storage module 10.

While the vehicles 100 can move anywhere in the top level 16, in order to reach or place a storage bin 50 from/at one of the stacks (also referred to as a storage cell), the vehicles 100 can also be brought into a position, where the lever 120 extends over an edge of the storage module 10 as illustrated. Here, the carrier platform 200 can be lifted or lowered to a handover point near a floor of the warehouse, where a storage bin 50 can be exchanged (to be placed into the storage module 10 or to be retrieved therefrom). This can be achieved by the lifting mechanism of the vehicle 100, such as a strap, belt, rope or wire 250 connecting the lever 120 with the carrier platform 200 (the latter of which gripping a storage bin 50.

Figure 8 additionally illustrates an exemplary set of guide rails 22, which are depicted only for one storage cell and only for one side of the storage cell, but can be arranged at more than one storage cell as well as at more than one side of one or more storage cells. Such guide rails 22 can run vertically in the storage area 14 and are associated with one of the stacks (storage cell).

The fixed fingers 222 can have an outer surface 228, 229 (Figure 4) configured to slide in such guide rail 22 during the lifting and lowering of the carrier platform 200 above the storage cell. The guide rail 22 can have an L-shaped or U-shaped cross-section, into which the fixed fingers 222 fit, which stabilises the carrier platform 200 during vertical movement and, hence, stabilises the storage bin 50 during vertical movement.

The guide rails 22 can have an upper and a lower end with a V-shape or open funnel shaped cross-section, in order to facilitate receiving of fixed finger 222 in the guide rail 22. The cross-section can correspond to that of the recess 320 of the finger cover 310 and illustrated in Figure 7, as the guide rail 22 and the finger cover recess 320 receive the same outer surfaces 228, 229 of the fixed finger 222.

In addition, the outer surface 228 of the fixed finger 222 can be curved or at least have an inclined lower end. This facilitates inserting the fixed finger 222 into the recess 320 of the finger cover 310 as well as into the guide rail 22. For the same reason, the side surfaces 229 can transition into inclined surfaces 227 at the lower end of the fixed finger 222.

It is to be understood that guide rails 22 can also be mounted on an exterior side of the storage area 14 or the entire storage module 10 or warehouse storage system, so that the carrier platform 200 can likewise be stabilised during a vertical movement to and from the handover point, i.e., beyond the outer edge of the storage module 10, where the levers 120 and carrier platforms 200 of the two vehicles are illustrated in Figure 8.

It is to be understood that the vehicle 100 can also be employed to move on a (e.g., ground) floor of a warehouse. Thus, instead of being bound to the top level 16, the vehicle 100 can drive anywhere on a floor, in order to move storage bins 50 from one place to another. The vehicle 100 or robot is not restricted to the type of floor surfaces, where it can be employed.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A vehicle (100) for transporting a storage bin (50) in a warehouse (1), the vehicle (100) comprising:
a movable body (110) configured to move on a surface;
a lever (120) extending from the movable body (110);
a carrier platform (200) coupled to the lever (120) and configured to carry a storage bin (50); and
a bin stabiliser (210, 220, 270, 310) arranged at least on opposite sides of the carrier platform (200) and configured to reduce or avoid movement of the storage bin (50) relative to the carrier platform (200).

2. The vehicle (100) of claim 1, wherein the bin stabiliser (210, 220, 270, 310) comprises at least two fixed fingers (222) arranged on opposite sides of the carrier platform (200), and wherein each fixed finger (222) has a contact surface (225) configured to contact a surface of the storage bin (50) at an outer or inner circumference of the storage bin (50), when the storage bin (50) is carried by the carrier platform (200),
wherein, preferably, the bin stabiliser (210, 220, 270, 310) comprises four fixed fingers (222) arranged pairwise on opposite sides of the carrier platform (200).

3. The vehicle (100) of claim 2, wherein the contacting surface (225) of each fixed finger (222) transitions into an inclined surface (226) towards a lower end of the fixed finger (222) configured to facilitate gliding of the fixed finger (222) over an edge of the storage bin (50).

4. The vehicle (100) of claim 2 or 3, wherein each fixed finger (222) has a vertical extent to contact the storage bin (50) at at least two spaced apart vertical positions of the storage bin (50), and/or
wherein at least one of the fixed fingers (222) has a horizontal extent equal to or larger than 2%, 5%, 10%, 20% or 50% of a horizontal extent of the storage bin (50), preferably corresponding to 5% to 20% of the horizontal extent of the storage bin (50).

5. The vehicle (100) of any one of claims 2 to 4, wherein at least one of the fixed fingers (222) has an outer surface (228, 229) configured to slide in a guide rail (22) of a storage system (10).

6. The vehicle (100) of any one of claims 2 to 5, wherein the bin stabiliser (210, 220, 270, 310) comprises at least one finger cover (310) coupled to the lever (120) and including a recess (320) configured to contact a surface (228, 229) of a fixed finger (222).

7. The vehicle (100) of claim 6, wherein the recess (320) of the finger cover (310) has a V-shape or open funnel-shape in a vertical direction configured to facilitate gliding of the fixed finger (222) into the recess (320).

8. The vehicle (100) of claim 6 or 7, wherein the at least one finger cover (310) has a contact surface (340) configured to contact a surface of the storage bin (50) at a circumference of the storage bin (50), when the storage bin (50) is carried by the carrier platform (200).

9. The vehicle (100) of any one of claims 1 to 8, wherein the bin stabiliser (210, 220, 270, 310) comprises at least one cover (310) coupled to the lever (120) and configured to contact a portion of the carrier platform (200) and/or a portion of the storage bin (50).

10. The vehicle (100) of any one of claims 1 to 9, wherein the bin stabiliser (210, 220, 270, 310) comprises a pair of clasps (211a, 211b) arranged on one side of the carrier platform (200), and one clasp (210) arranged on an opposite side of the carrier platform (200),
wherein the clasps (211a, 211b) of the pair of clasps (211a, 211b) are spaced apart from one another, and
wherein each of the clasps (210, 211) is configured to grip the storage bin (50).

11. The vehicle (100) of any one of claims 1 to 10, wherein the bin stabiliser (210, 220, 270, 310) comprises at least three clasps (210) evenly distributed along a circumference of the carrier platform (200),
wherein, preferably, the bin stabiliser (210, 220, 270, 310) comprises four clasps (210) arranged pairwise on opposite sides of the carrier platform (200).

12. The vehicle (100) of any one of claims 1 to 11, wherein the carrier platform (200) comprises a pin (270), and the lever (120) comprises a retaining opening (170) configured to receive at least a portion of the pin (270).

13. The vehicle (100) of any one of claims 1 to 12, further comprising:
a lifting mechanism (250, 251) configured to raise and lower a storage bin (50), and/or
a steering mechanism (130) configured control a moving direction of the movable body (110).

14. A warehouse storage module (10) providing space for a three-dimensional arrangement of storage bins (50), the storage module (10) comprising a storage area (14) and a top level (16) arranged above the storage area (14), wherein the storage area (14) is adapted to accommodate a plurality of stacks of storage bins (50) arranged in a horizontal two-dimensional grid at a bottom of the storage module (10), wherein the top level (16) is adapted to allow at least one vehicle (100) according to one of claims 1 to 13 to be movable, at the top level (16), to retrieve and place storage bins (50) from and to the plurality of stacks.

15. A warehouse system (1) providing space for a three-dimensional arrangement of storage bins (50), wherein the warehouse system (1) comprises a plurality of interconnected storage modules (10) according to claim 14, wherein the plurality of interconnected storage modules (10) comprises at least two levels of storage modules (10) placed one above the other in an individual room.
